# EUROPEAN PATENT APPLICATION

(11) **EP 4 624 093 A1**
(43) Date of publication of application: **01.10.2025**
(21) Application number: 25166040.3
(22) Date of filing: 25.03.2025
(51) Int. Cl.: B23Q 3/08, B25B 11/00, B27M 1/08

(54) **WORKING CENTER FOR WORKING A PIECE TO BE POSITIONED ON A SACRIFICIAL BOARD PLACED ON A WORKING PLANE**

(30) Priority: 27.03.2024 IT 202400006826
(71) Applicant: SCM Group S.p.A., 47921 Rimini (RN) (IT)
(72) Inventor: MACARI, Alan, 47921 RIMINI (IT)
(74) Representative: Tiburzi, Andrea

(57) **Abstract**

The present invention relates to a working center (1) for working a piece (P) to be positioned on a sacrificial board (SP) placed on a working plane (2). Said working center (1) comprises:
- a working plane (2) comprising:
a surface (20) provided with a plurality of raised portions (20A) for supporting a sacrificial board (SP) intended to support said piece (P), as well as at least one opening (21) connectable to a depression generating device (DG) for generating a depression through a respective suction duct (4), and
- a deflector (3) for said at least one opening (21) of said working plane (2), wherein said deflector (3) is arranged at said opening (21), has a funnel shape and comprises a head (31) shaped and dimensioned in such a way that a space (S) is present between said head (31) and said opening (21).

## Description

The present invention relates to a working center for working a piece to be positioned on a sacrificial board placed on a working plane.

In particular, the invention relates to the structure of a work center whose working plane is designed to maximize the amount of air sucked under a peripheral portion of a workpiece arranged on a sacrificial board (which is in turn arranged on the working plane), so that the workpiece is stably positioned on the sacrificial board during machining.

The workpiece can be a panel made of wood or other material.

The sacrificial panel is a panel used as a supporting and blocking surface for the workpiece.

More specifically, the working plane comprises one or more openings, each of which is connected to a device for generating a depression (such as a vacuum pump) through a respective suction duct, as well as one or more deflectors, each of which is positioned at a respective opening.

A deflector is shaped and dimensioned in such a way as to channel into an opening of the working plane an amount of air coming from the side of the opening itself, and preferably a further amount of air coming from the center of said opening in the working plane (in the event that the head of the deflector is provided with an opening).

### Prior art

Currently, a working center known type comprises a working plane and said working plane can be of different types.

Below, for the sake of completeness, three types of working planes will be mentioned: a working plane called a "working plane with bars", a working plane called a "multifunction working plane", and a working plane that can be called a "single working plane" (which can be made of Bakelite or other material) on which a sacrificial panel can be placed.

The working plane called "bar working plane" is supported by a basement and comprises a plurality of bars to support the workpieces, parallel to each other and movable along said basement.

Said working plane is mainly used for through-feed machining (i.e. cutting the panel into parts or drilling through holes in the panel and then machining the edge of the panel).

The working plane called "multifunctional worktop" is a working plane comprising a surface provided with a plurality of raised portions or reliefs.

In general, the raised portions of said plurality of raised portions are distributed on said surface.

For machining a workpiece, a sacrificial panel is arranged on said raised portions.

Furthermore, said working plane is provided with one or more openings and comprises a chamber arranged below said surface.

A device for generating a depression, such as a vacuum pump, is connectable to said chamber to generate a depression in said chamber, so that an attractive force is exerted on a sacrificial panel arranged on the raised portions of said surface through openings in said working plane.

Said working plane is supported by a basement and can comprise:
- fastening means for fixing the workpiece on said working plane, and
- a plurality of stop elements for the piece, so that the workpiece is correctly positioned with respect to the working plane, each of which is movable between a rest position, in which it is inside the working plane (i.e. in a lowered position with respect to the working plane), and an operating position, in which it protrudes with respect to the working plane (i.e. in a raised position with respect to the working plane) in such a way that the panel contacts said stop elements.

Said working plane is mainly used for non-through machining (i.e. removing portions of a panel surface, without the panel being cut into parts or through holes being made on the panel).

However, in the event that it is necessary to carry out a through machining, or if the machining concerns at least one lateral edge of the panel or the lower face of the panel, one or more supporting and blocking devices are arranged and fixed on the multifunctional working plane and the workpiece is positioned and blocked with respect to said multifunctional working plane by means of said supporting and blocking devices.

The single working plane comprises a surface provided with a plurality of raised portions.

In general, the raised portions of said plurality of raised portions are distributed on said surface.

Differently from the multifunctional working plane, said single working plane does not have a chamber arranged below said surface.

For machining a piece, a sacrificial panel is arranged on said raised portions.

Furthermore, said working plane is provided with one or more openings.

Said openings are connected via a respective duct to a device for generating a depression, such as a vacuum pump.

When the device for generating a depression is activated, a depression is created and the workpiece (arranged on the sacrificial panel) is subjected to an attractive force exerted by said depression on said workpiece, so that said workpiece adheres to the sacrificial panel which is pushed onto said raised portions.

Although a depression is created to "attract" the workpiece onto the sacrificial panel (arranged on the working plane), a disadvantage is that said workpiece is not positioned stably on the sacrificial panel since the attractive force exerted by said depression on said workpiece is greater at the opening of the working plane and less as the distance from said opening increases.

In other words, this attractive force is greater on the portion of the workpiece at the opening and less on the peripheral portion of the workpiece, which is distant from said opening.

As a result, there is a risk that the machining of the said workpiece is not performed correctly as its peripheral portion is not stable on the sacrificial panel.

### Aim of the invention

Aim of the present invention is to overcome said disadvantage by providing a work center for working a workpiece, the working plane of which is designed to ensure greater stability of the workpiece arranged on the working plane (i.e. arranged on a sacrificial panel which is in turn arranged on the working plane) compared to a workpiece arranged on a working plane of a working center of known type.

### Object of the invention

It is therefore specific object of the invention a working center for working a piece comprising:
- a working plane comprising:
   a surface provided a plurality of raised portions for supporting a sacrificial board intended to support said piece, as well as at least one opening connectable to a depression generating device for generating a depression through a respective suction duct; and
- a deflector for said at least one opening of said working plane, wherein said deflector is arranged at said opening, has a funnel shape and comprises a head shaped and dimensioned in such a way that a space is present between said head and said opening.

Said working center is configured in such a way that, when said depression generating device is on and said piece is arranged on said sacrificial board placed on said plurality of raised portions, a first portion of said piece, at said head, is subjected to a first attractive force exerted by said depression due to an amount of air directed to said opening and blocked at least partially by said head of said deflector, and a second portion of said piece, positioned around said head, is subjected to a second attractive force exerted by said depression due to an amount of air channeled into said space to enter said opening.

In a first alternative, the head of said deflector can comprise an opening.

In a second alternative, the head of the deflector can comprise a disk and said amount of air directed to said opening is totally blocked by said head of the deflector.

With reference to the opening of said surface, said opening of said surface can be delimited by a rounded edge.

The deflector can be arranged at the opening of said surface in such a way that the head does not exceed the raised portions of said surface in height.

Said deflector can comprise a body and a plurality of protrusions, wherein each protrusion of said plurality of protrusions extends outwards from said body and allows said deflector to be positioned on the surface of said working plane.

Each protrusion of said plurality of protrusions can comprise a respective through hole, and said working center can comprise a plurality of coupling elements for removably coupling said deflector to the surface of said working plane, wherein each coupling element of said plurality of coupling elements is inserted into a respective through hole of a protrusion of said deflector.

The body of said deflector can be hollow.

It is preferable that the body of said deflector has a truncated cone shape.

Furthermore, the body of said deflector can comprise a concave lateral surface.

Said depression generating device can be included in the working center.

### Figure list

The present invention will be now described, for illustrative, but not limitative purposes, according to its embodiment, making particular reference to the enclosed figures, wherein:

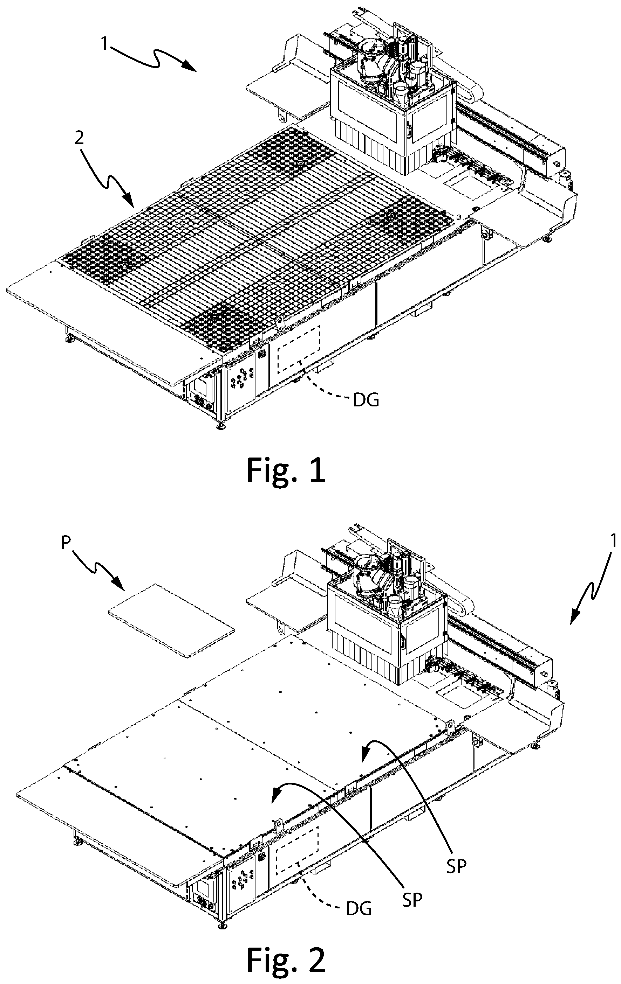

Figure 1 is a schematic view of a working center for machining pieces comprising a working plane comprising a surface provided with a plurality of raised portions, as well as openings in each of which a deflector is positioned (although not shown in Figure 1, the raised portions are distributed over the entire surface of the working plane);
Figure 2 is a schematic view of the working center of Figure 1 showing two sacrificial panels arranged next to each other on the surface of the working plane and a wooden panel to be machined;
Figure 3 shows a detail of a portion of a working plane of the working center in Figure 1 in which an opening and a plurality of raised portions are visible;
Figure 4 is a cross-sectional view of the portion of the working plane in Figure 3 at the opening;
Figure 5 shows the portion of the working plane of Figure 3 where a deflector is positioned in said opening;
Figure 6 is a cross-sectional view of the portion of the working plane of Figure 5 at the deflector arranged in said opening, when a depression is generated (through the use of a depression generation device) and an amount of air is conveyed into said opening;
Figure 7 is a top perspective view of a first example of a deflector, wherein said deflector comprises a body, a head and a plurality of protrusions, and said head has an opening;
Figure 8 is a bottom perspective view of the deflector of Figure 7;
Figure 9 is a top view of the deflector of Figure 7;
Figure 10 is a bottom view of the deflector of Figure 7;
Figure 11 is a side view of the deflector of Figure 7;
Figure 12 is a sectional view of the deflector of Figure 11 along the plane A-A;
Figure 13 is a perspective view of a variant of the first example of a deflector, where each protrusion has a through hole for the insertion of a coupling element to couple the deflector to the working plane;
Figure 14 is a perspective view of a second example of a deflector, where the head of said deflector is without an opening;
Figure 15 is a perspective view of a variant of the second example of a deflector of Figure 14.

In the various figures, similar parts will be indicated with the same numerical references.

### Detailed Description of the invention

With particular reference to the Figures, a working center 1 for working pieces P is described.

In the example that is described, said piece P is a panel, in particular a wooden panel.

However, said piece P can be made of metal or glass or plastic or any other material, without departing from the scope of the invention.

Herein, reference is made to a working center with a working plane called a single working plane, but the same considerations and the same advantages can be applied to a working center with a working plane called a "multifunction working plane".

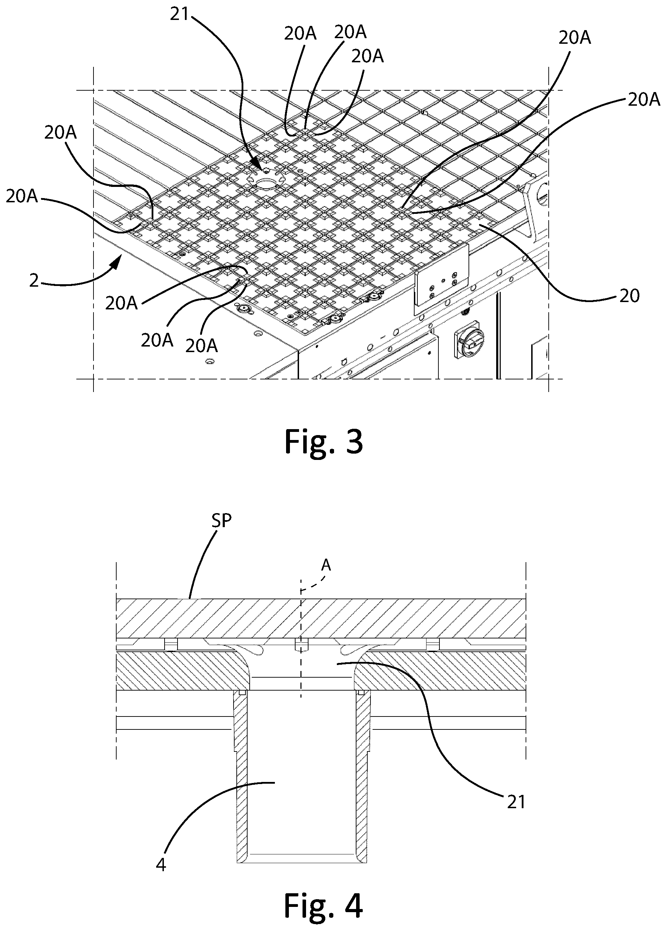

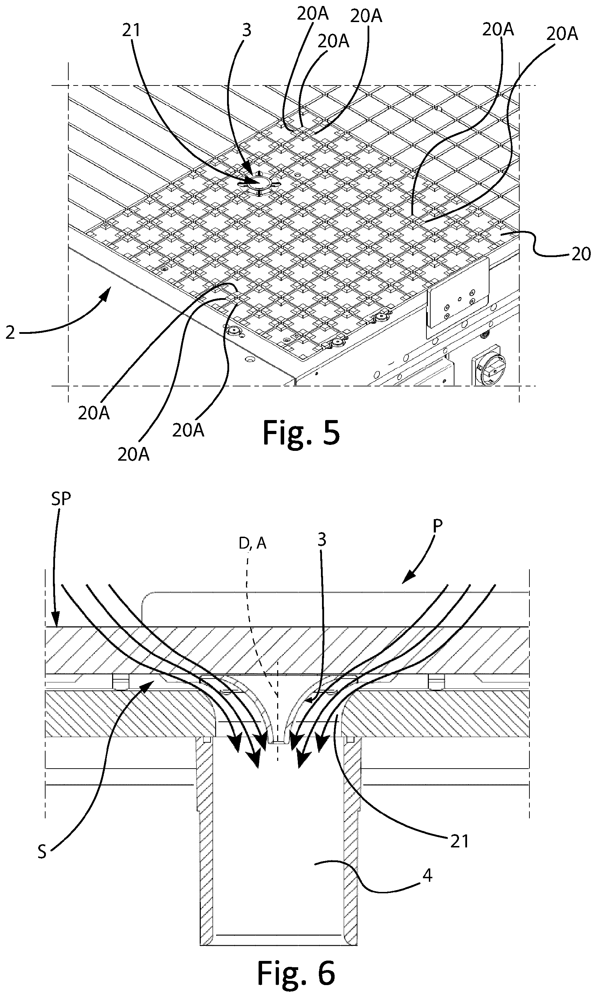

With reference to the working center 1, said working center 1 comprises:
- a working plane 2 comprising:
   a surface 20 provided with a plurality of reliefs or raised portions 20A (shown particularly in Figure 3 and in Figure 5) for supporting a sacrificial board SP intended to support a piece P, as well as at least one opening 21 connectable to a depression generating device DG for generating a depression, and
- a deflector 3 for said at least one opening 21 of said working plane 2, wherein said deflector 3 is arranged at said opening 21 and comprises a head 31 shaped and dimensioned in such a way that a space S is present between said head 31 and said opening 21.

Said one or more openings 21 are connectable to the depression generation device DG through a respective suction duct 4, partially shown in Figure 6.

The working center 1 can comprise the depression generating device DG which can be arranged inside or outside a basement which supports the working plane 2.

In the embodiment that is described, said depression generating device DG is inside said basement.

The working center 1 can comprise a plurality of depression generating devices, each of which can be connected to a respective group of openings (comprising one or more openings 21) arranged on said working plane 2.

Alternatively, the working center 1 can comprise a plurality of depression generating devices and a collector (not shown) connected to each of said depression generating devices. In said alternative, said collector is connected through a respective duct to each opening 21 of the surface 20 of the working plane 2.

Said working center 1 is configured in such a way that, when said depression generating device DG is on and when said piece P is arranged on said sacrificial board SP which is placed on said plurality of raised portions 20A, a first portion of said piece P, which is positioned (on said sacrificial board SP) at said head 31 of said deflector 3, is subjected to a first attractive force exerted by said depression due to an amount of air directed to said opening 21 and partially or totally blocked by said head 31 of said deflector 3, and a second portion or peripheral portion of said piece P, which is positioned (on said sacrificial board SP) around said head 31 of said deflector 3, is subjected to a second attractive force exerted by said depression due to an amount of air channeled into said space S to enter said opening 21.

In other words, the first portion of the piece P is a portion of the piece P whose projection falls on the head 31 of the deflector 3, while the second portion of the piece P is a further portion of the P whose projection falls outside the head 31 of the deflector 3.

The fact that the amount of air directed towards an opening 21 of the surface 20 of the working plane 2 is partially or totally blocked by the head 31 of the deflector 3 depends on the presence or absence of an opening in the head 31 of the deflector 3.

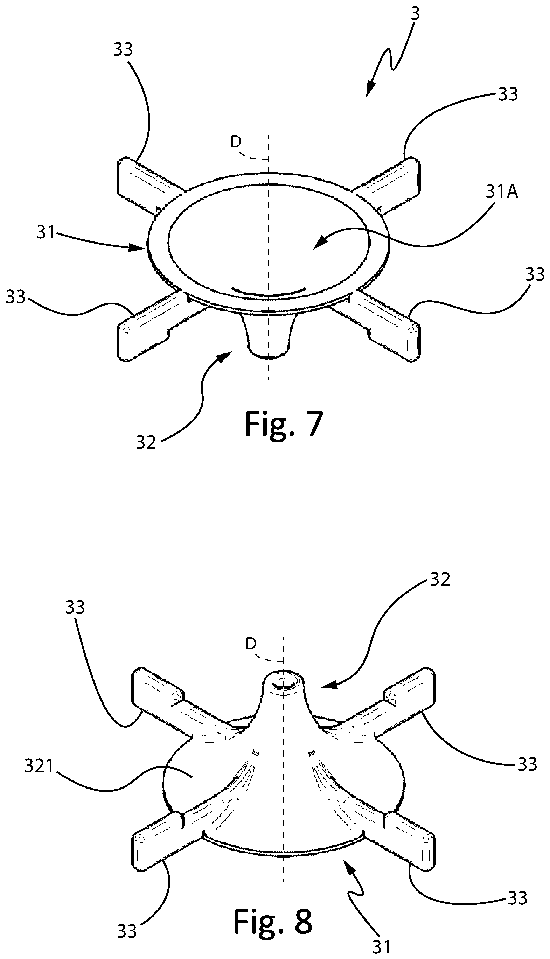

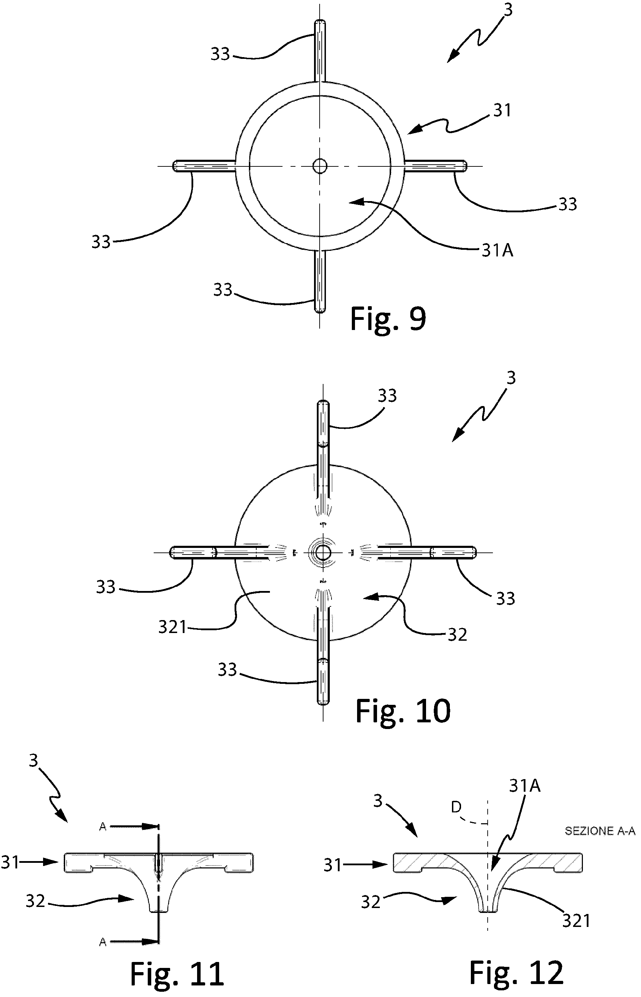

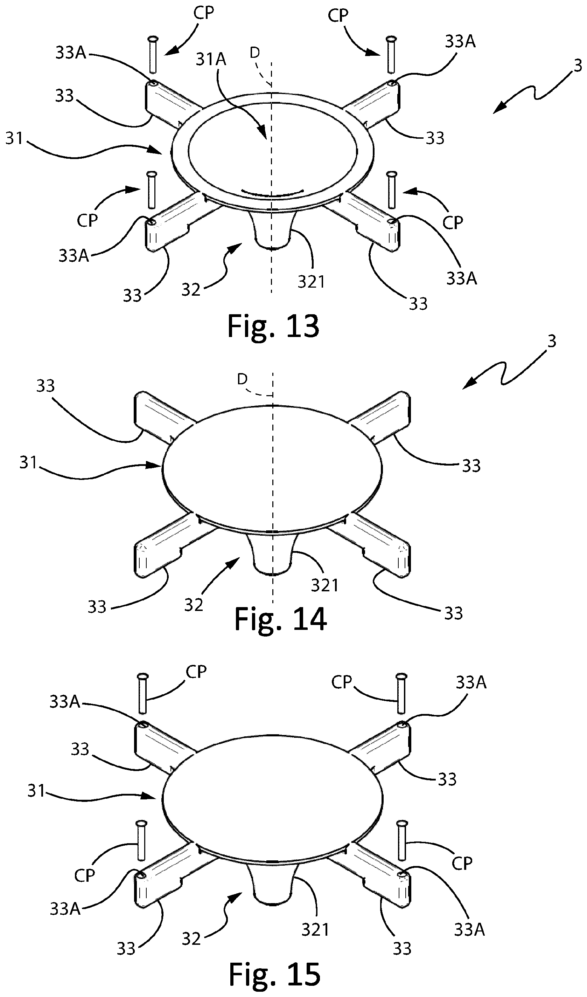

As described below, the head 31 of the deflector 3 can be provided with an opening 31A (see the deflector shown in Figures 7 to 13) or can be without an opening (see the deflector shown in Figures 14 and 15).

In the example that is described, the working plane 2 is made of Bakelite.

Furthermore, in the example that is described, for convenience, four groups of raised portions have been depicted on the surface 20 of the working plane 2 at a respective corner of said surface 20.

Furthermore, in the example that is described, a respective deflector 3 has been depicted at a respective opening arranged inside each group of raised portions.

However, the raised portions 20A are distributed over the entire surface 20 of the working plane 2 in such a way as to form a network.

In particular, the raised portions 20A have the same height.

The openings 20A can be arranged at any point of the surface 20 of the working plane 2. Consequently, the deflectors 3 can be positioned at any point of the surface 20 of the working plane 2.

In particular, each opening 21 (for the positioning of a respective deflector 3) is delimited by a rounded edge.

Figures 7 to 12 show a respective view of a first example of deflector 3.

As mentioned above, the deflector 3 comprises a head 31.

Furthermore, the deflector 3 comprises a body 32 and a plurality of protrusions 33, each of which extends outwards from said body 32 and allows said deflector to be positioned on the surface 20 of the working plane 2.

The deflector 32 has a longitudinal axis D.

The body 32 of the deflector 3 can have different shapes and different sizes based on the opening 21 formed on the working plane 2.

Consequently, the amount of air entering said opening 21 depends not only on the shape and size of the head 31, but also on the shape and size of said body 32.

Figure 13 shows a variant of the first example of deflector 3.

In this variant, each protrusion 33 comprises a respective through hole 33A for the insertion of a coupling element CP to removably couple said deflector 3 to the surface 20 of the working plane 2, so that said deflector 3 is stably positioned on said surface 20.

For this purpose, the working center 1 can comprise a plurality of coupling elements CP for coupling said deflector 3 to the surface 20 of the working plane 2, wherein each of said coupling elements CP of said plurality of coupling elements CP is inserted into a respective through hole 33A of a protrusion 33 of said deflector 3.

Thus, by means of the protrusions 33 mentioned above, the deflector 3 can be laid or coupled onto the surface 20 of the working plane 2.

In the first example of deflector and in its variant, the head 31 of said deflector 3 comprises an opening 31A.

Furthermore, the body 32 of said deflector 3 is a hollow body.

Consequently, with reference to the first example of deflector 3 and its variant, the amount of air directed towards said opening 21 of the surface 20 of the working plane 2 is partially blocked by the head 31 of the deflector 3.

In particular, a part of said amount of air directed towards said opening 21 is blocked by a peripheral portion of the head 31 which delimits the opening 31A.

In other words, a portion of said amount of air directed towards said opening 21 hits the peripheral portion of the head 31 of the deflector 3.

Furthermore, since the body 32 of the deflector 3 is hollow, the amount of air entering the opening 31A of the head 31 passes through said body 32 to enter the suction duct 4.

Returning to the body 32 of the deflector 3, said body 32 has a truncated conical shape.

It is preferable that said body 32 comprises a concave lateral surface 321.

In other words, said deflector 3 has the shape of a funnel and is positioned on the surface 20 of the working plane 2 in such a way that the head of the funnel (i.e. the head 31 of the deflector 3) is on said surface 20.

Due to its funnel shape, the deflector 3 has a longitudinal section that decreases in width from the head 31 downwards.

Consequently, in longitudinal section, the body 32 has a width that decreases as the distance from the head 31 increases.

The presence of the deflector 3 (which has a funnel shape) on the surface 20 of the working plane 2 allows to reduce the amount of air that is sucked by the depression generating device DG at the opening 21 of said surface 20, and to increase the amount of air that is sucked by said depression generating device DG in a direction perpendicular to the longitudinal axis D of the deflector 3.

As stated above, the depression generating device DG can be connected to the opening 21 through a suction duct 4. Therefore, the presence of the deflector 3 on the surface 20 of the working plane 2 allows to increase the amount of air that is sucked by the depression generating device DG in a direction perpendicular to an axis A passing through the centre of said opening 21 or substantially through the centre of said opening 21.

Said axis A is perpendicular to the working plane 2.

When the deflector 3 is arranged on the opening 21 of the surface 20, the longitudinal axis D of the deflector 3 coincides with the axis A of the opening 21 or substantially coincides with the axis A of the opening 21.

In the example that is described, the longitudinal axis D of the deflector 3 coincides with the axis A of the opening 21.

The suction duct 4 comprises at least one end portion which is connectable to the opening 21 of the surface 20. Said end portion has a longitudinal axis.

Thus, when the deflector 3 is arranged on the opening 21 of the surface 20, the deflector 3 allows to increase the amount of air that is sucked by the depression generating device in a direction perpendicular to the longitudinal axis of the end portion of the suction duct 4.

Considering the same depression value, when the deflector 3 is arranged on the opening 21 of the surface 20, the amount of air sucked by the depression generating device DG in a radial direction (i.e. around the body 32 of the deflector 3) is greater than the amount of air sucked by said depression generating device DG in the same direction, when the deflector 3 is not arranged on the same opening 21.

In fact, when the deflector 3 is not arranged on the opening 21 of the surface 20, the amount of air sucked by the depression generating device DG is predominantly the amount of air sucked through said opening 21.

In other words, when the deflector 3 is not present on the opening 21 of the surface 20, the greatest amount of air sucked by the depression generating device DG is that along the axis A of the opening 21.

Consequently, the greatest amount of air sucked in by the depression generating device DG is that along the longitudinal axis of the end portion of the suction duct 4.

Regardless of the absence or presence of an opening 31A in the head 31 of the deflector 3 (as in the variant of the deflector 3 described below), the presence of the deflector 3 on the opening 21 of the surface 20 divides the overall amount of air sucked by the depression generating device DG into two: an amount of air sucked by the depression generating device at the opening 21 and an amount of air sucked by the depression generating device DG around the opening 21.

When the head 31 of the deflector 3 comprises an opening 31A, a first depression is generated at the opening 21 of the surface 20 and is mainly due to the amount of air sucked by the depression generating device DG through the opening 31 of the head 31 of the deflector 3.

Therefore, the first attractive force exerted on a first portion of the piece P (at the head 31 of the deflector 3) is substantially due to said first depression.

A second depression is however generated around the opening 21, mainly due to the amount of air entering the space S between the head 31 and the opening 21 of the surface 20.

When the head 31 of the deflector 3 does not have an opening 31A, a first depression is still generated at the opening 21 of the surface 20, and is substantially due to the amount of air that enters the space S present between the head 31 and the opening 21 of the surface 20.

Therefore, a first attractive force exerted on a first portion of the piece P (i.e. a portion at the head 31 of the deflector 3) is still generated, but it is substantially due to the amount of air entering the space S between the head 31 and the opening 21 of the surface 20.

A second depression is generated around the opening 21 and is mainly due to the amount of air that enters the space S between the head 31 and the opening 21 of the surface 20.

In other words, differently from the deflector 3 having an opening 31A in the head 31, when the head 31 of the deflector 3 is without an opening 31A, the amount of air entering the space S between the head 31 and the opening 21 of the surface 20 (since it is sucked by the depression generating device DG) generates both the first attractive force and the second attractive force.

In both variants of the deflector 3, the second attractive force exerted on a second portion of the piece P (i.e. a portion positioned around the head 31 of the deflector 3) is mainly due to the amount of air entering the space S between the head 31 and the opening 21 of the surface 20.

Said deflector 3 is arranged in the opening 21 of the surface 20 of the working plane 2 in such a way that its head 31 does not exceed in height the raised portions 20A present on said surface 20.

In other words, the height of a part of the deflector 3 defined by the head 31 and each protrusion 33 is less than or equal to the height of the raised portions 20A of the surface 20.

The raised portions 20A can have a height between 3mm - 10mm, preferably 4mm or 5mm.

With reference to the depression generating device DG, said depression generating device DG can be included in said working center 1.

Figure 14 shows a second example of deflector 3.

Differently from the first example of deflector described above, the head 31 of such deflector 3 is without an opening.

In other words, the head 31 of the second example of deflector 3 comprises a disk, preferably a flat disk.

Furthermore, in said second example, it is not necessary for the body 32 to be hollow nor to have a truncated conical shape.

Figure 15 shows a variant of the second example of deflector 3.

In this variant, each protrusion 33 of the second example of deflector 3 is provided with a respective through hole 33A for the insertion of a coupling element CP to removably couple said deflector 3 to the surface 20 of the working plane 2, so that said deflector 3 is stably positioned on said surface 20.

Consequently, with reference to the second example of deflector 3 and its variant, the amount of air directed towards said opening 21 of the surface 20 of the working plane 2 is totally blocked by the head 31 of the deflector 3.

In other words, the amount of air directed towards said opening 21 hits the head 31 of the deflector 3.

However, the second portion or peripheral portion of the piece P which is positioned (on the sacrificial panel SP) around the head 31 of the deflector 3, is in any case subject to a second attractive force exerted by said depression due to an amount of air channeled into the space S (present between the head 31 of the deflector and the opening 21 of the surface 20 of the working plane 2) to enter said opening 21.

### Advantages

Advantageously, as already mentioned, the working center 1 for working pieces, object of the invention, offers the possibility for a piece P to be stably arranged on a sacrificial panel SP placed on the working plane 2, so that the machining of said piece P is carried out with greater precision than machining carried out on a piece arranged on a sacrificial panel placed on a working plane of a working center of known type.

Differently from a working center of known type, the presence of a respective deflector 3 at a respective opening 21 of the working plane 2 allows the attractive force exerted on a peripheral portion of the workpiece to be maximized, when a depression is generated through a depression generating device.

The present invention has been described for illustrative, but not limitative purposes, according to its preferred embodiments, but it is to be understood that variations and/or modifications can be carried out by a skilled in the art, without departing from the scope thereof, as defined according to enclosed claims.

## Claims

1. Working center (1) for working a piece (P) comprising:
- a working plane (2) comprising:
a surface (20) provided with a plurality of raised portions (20A) for supporting a sacrificial board (SP) intended to support said piece (P), as well as at least one opening (21) connectable to a depression generating device (DG) for generating a depression through a respective suction duct (4); and
- a deflector (3) for said at least one opening (21) of said working plane (2), wherein said deflector (3) is arranged at said opening (21), has a funnel shape and comprises a head (31) shaped and dimensioned in such a way that a space (S) is present between said head (31) and said opening (21); said working center (1) being configured in such a way that, when said depression generating device (DG) is on and said piece (P) is arranged on said sacrificial board (SP) placed on said plurality of raised portions (20A), a first portion of said piece (P), at said head (31), is subjected to a first attractive force exerted by said depression due to an amount of air directed to said opening (21) and blocked at least partially by said head (31) of said deflector (3), and a second portion of said piece (P), positioned around said head (31), is subjected to a second attractive force exerted by said depression due to an amount of air channeled into said space (S) to enter said opening (21).

2. Working center (1) according to claim 1, wherein said head (31) of said deflector (3) comprises an opening (31A).

3. Working center (1) according to claim 1, wherein said head (31) of said deflector (3) comprises a disk and said amount of air directed to said opening (21) is totally blocked by said head (31) of said deflector (3).

4. Working center (1) according to any one of the previous claims, wherein said opening (21) of said surface (20) is delimited by a rounded edge.

5. Working center (1) according to any one of the previous claims, wherein said deflector (3) is arranged at said opening (21) of said surface (20) in such a way that said head (31) does not exceed the raised portions (20A) of said surface (20) in height.

6. Working center (1) according to any one of the previous claims, wherein said deflector (3) comprises a body (32) and a plurality of protrusions (33), wherein each protrusion (33) of said plurality of protrusions (33) extends outwards from said body (32) and allows said deflector (3) to be positioned on the surface (20) of said working plane (2).

7. Working center (1) according to the previous claim, wherein each protrusion (33) of said plurality of protrusions (33) comprises a respective through hole (33A), and said working center (1) comprises a plurality of coupling elements (CP) for removably coupling said deflector (3) to surface (20) of said working plane (2), wherein each coupling element (CP) of said plurality of coupling elements (CP) is inserted into a respective through hole (33A) of a protrusion (33) of said deflector (3).

8. Working center (1), according to claim 2, wherein the body (32) of said deflector (3) is hollow.

9. Working center (1), according to the previous claim, wherein the body (32) of said deflector (3) has a truncated cone shape.

10. Working center (1) according to the previous claim, wherein said body (32) of said deflector (3) comprises a concave lateral surface (321).

11. Working center (1) according to any one of the previous claims, wherein said depression generating device (DG) is included in said working center (1).
